# EUROPÄISCHE PATENTANMELDUNG

(11) **EP 2 052 840 A2**
(43) Veröffentlichungstag der Anmeldung: **29.04.2009**
(21) Anmeldenummer: 08018366.8
(22) Anmeldetag: 21.10.2008
(51) Int. Cl.: B29C 47/90, B29C 47/88

(54) **Stufenlos einstellbare Kalibrierhülse für extrudierte Kunststoffrohre**

(30) Priorität: 23.10.2007 DE 102007050938
(71) Anmelder: INOEX GmbH, 32547 Bad Oeynhausen (DE)
(72) Erfinder: Schmuhl, Jörg, Dr., 15711 Königs Wusterhausen (DE); Klose, Reinhard, 31737 Rinteln (DE); Bucksch, Gordon, 32049 Herford (DE); Diekhaus, Brigitte, 33659 Bielefeld (DE); Möller, Jörg, 32257 Bünde (DE); Kriener, Dirk, 32479 Hille (DE)
(74) Vertreter: Seewald, Jürgen

(57) **Zusammenfassung**

Die vorliegende Erfindung betrifft eine stufenlos einstellbare Kalibrierhülse für extrudierte Kunststoffrohre mit einem Einlaufkopf (12) und einem Auslaufkopf (13), deren axialer Abstand zueinander verstellbar ist, sowie mit Innenbändern (16) und Außenbändern (17), die sich in einem zylindrischen Mittelstück (10.1) der Kalibrierhülse (10) nach Art eines Scherengitters kreuzen und an Kreuzungspunkten gelenkig miteinander verbunden sind, wobei die Innenbänder (16), einen Einlaufkonus (10.2) bzw. Auslaufkonus (19.3) bildend, über das Mittelstück (10.1) hinaus verlängert und mit ihren Enden gelenkig an den Einlaufkopf (12) bzw. Auslaufkopf (13) angeschlagen sind.

## Beschreibung

Die vorliegende Erfindung betrifft eine stufenlos einstellbare Kalibrierhülse für extrudierte Kunststoffrohre mit einem Einlaufkopf und einem Auslaufkopf gemäß dem Oberbegriff des Anspruchs 1.

In der DE 198 43 340 C2 ist eine Kalibrierhülse beschrieben, deren Innendurchmesser im laufenden Betrieb auf Kunststoffrohre unterschiedlicher Außendurchmesser einstellbar ist. Damit wird der Tatsache Rechnung getragen, dass unter den heutigen Produktionsbedingungen die Auftragslose immer kleiner werden, d.h., die Extrusionsanlagen ständig umgestellt werden müssen. Diese Umstellungen verursachen Stillstandzeiten der Extrusionsanlage, einen hohen Arbeitsaufwand beim Wechseln der einzelnen Ausrüstungsteife sowie Verluste an Kunststoffmaterial. Die Kalibrierhülse gemäß DE 198 43 340 C2 weist eine Vielzahl von in ihrer Längsachse in Radialebenen angeordneten Lameilenkränzen auf, wobei die einzelnen Lamellen jedes Kranzes radial verstellbar sind und sich von Radialebene zu Radialebene überlappen und in den Überlappungsbereichen eng aneinander liegen. Dadurch wird ein Hohlzylinder geschaffen, der ein extrudiertes Kunststoffrohr auf der Außenseite abstützt und in seinem Durchmesser, in Anpassung an den zu fahrenden Rohrdurchmesser verstellbar ist. Diese bekannte Kalibrierhülse ist relativ aufwändig aufgebaut. Außerdem lassen sich mit dieser Kalibrierhülse keine Kunststoffrohre mit einem exakt kreisförmigen Querschnitt erzeugen.

Eine gattungsgemäße Kalibrierhülse ist in der DE 103 18 137 B3 offenbart. Sie ist ebenfalls im laufenden Betrieb auf unterschiedliche Außendurchmesser von herzustellenden Kunststoffrohren verstellbar. Diese Kalibrierhülse weist ein zylindrisches Mittelstück auf, das von Innenbändern und Außenbändern gebildet ist, die sich nach Art eines Scherengitters kreuzen und an Kreuzungspunkten gelenkig miteinander verbunden sind. Die Innenbänder sind über die Außenbänder hinaus verlängert und bilden einen Einlaufkonus bzw. Auslaufkonus und sind mit ihren Enden gelenkig an einen Einlaufkopf bzw. Auslaufkopf angeschlagen. Der für die Kalibrierung der extrudierten Kunststoffrohre wesentliche Innendurchmesser der Kalibrierhülse wird durch Auseinanderziehen bzw. Zusammendrücken des Scherengitters verändert, wozu der Einlaufkopf und der Auslaufkopf axial zueinander verstellbar sind. Diese Kalibrierhülse zeichnet sich durch einen großen Stellbereich bei hoher Eigensteifigkeit aus. Des Weiteren garantieren die sich kreuzenden, miteinander gelenkig verbundenen Bänder eine absolut kreisrunde Form der Kalibrierhülse bei jedem eingestellten Durchmesser.

In der DE 10 2004 029 498 B3 und der DE 10 2005 002 820 B3 sind Lösungen offenbart, mit denen am Einlaufkopf der Kalibrierhülse u. a. eine effektivere Abdichtung des Vakuumtanks gegenüber der Umgebung erreicht werden soll. Dazu sind im Einlaufkopf Segmente vorgesehen, die zusammen mit den Innen- und Außenbändern radial verstellbar sind. Zur Anlage an das extrudierte Kunststoffrohr ausgebildete Stirnseiten der Segmente gewährleisten durch einen umlaufenden Kontakt mit dem Kunststoffrohr die Abdichtung des Vakuumtanks gegenüber der Umgebung. Gleichzeitig wird im Bereich der Segmente Wasser zugeführt, wodurch der Einlauf intensiv gekühlt wird und die Ausbildung eines Schmierfilms zur Gleitkühlung des extrudierten Kunststoffrohres gewährleistet ist. Außerdem verbessert ein sich im Bereich der Segmente ausbildender Wasserfilm die Abdichtung. Die durch die radial zustellbaren Segmente am Einlaufkopf der Kalibrierhülse erreichte Abdichtung ist sehr effektiv, jedoch relativ aufwändig.

Aufgabe der vorliegenden Erfindung ist es daher, eine gattungsgemäße Kalibrierhülse zur Verfügung zu stellen, bei der am Einlaufkopf mit einfachen Mitteln eine effektive Abdichtung des Vakuumtanks gegenüber der Umgebung und eine sehr gleichmäßige Benetzung der Rohroberfläche mit Wasser erreicht wird.

Gelöst wird diese Aufgabe mit einer Kalibrierhülse, die die Merkmale des Anspruchs 1 aufweist.

Die beiden Dichtungen und die zwischen ihnen gebildete Wasserkammer sorgen für eine effektive Abdichtung am Einlauf der Kalibrierhülse und gleichzeitig für eine intensive Kühlung und Gleitschmierung am Beginn des hohlzylindrischen Mittelstücks der Kalibrierhülse, dem ersten Kontaktpunkt mit der Schmelze. Dabei dichtet die äußere Dichtung gegen die Umgebung und die innere Dichtung gegen den Unterdruck im Vakuumtank ab.

Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: eine Extrusionsanlage zur Herstellung von Kunststoffrohren mit ihren Hauptkomponenten in schematischer Darstellung,
- Fig. 2: einen vergrößerten Ausschnitt A gemäß Figur 1 in geschnittener Darstellung,
- Fig. 3: einen Blick von schräg vom auf die Darstellung gemäß Figur 2,
- Fig. 4: einen vergrößerten Ausschnitt B gemäß Figur 2,

- Fig. 5: einen schematischen Blick auf eine auf den kleinsten Durchmesser eingestellte Dichtung,
- Fig. 6: einen schematischen Blick auf eine auf den größten Durchmesser eingestellte Dichtung, und
- Fig. 7.: eine schematische Darstellung des Einlaufbereichs nach einem weiteren Ausführungsbeispiel der Erfindung.

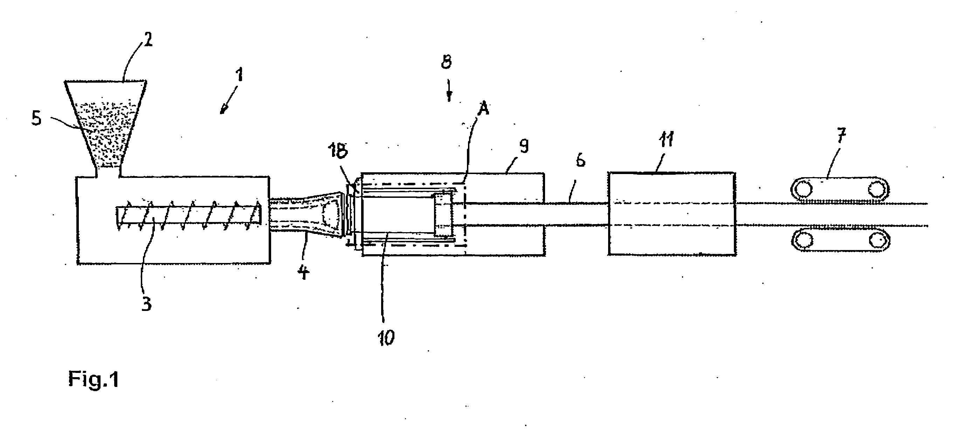

Die in Figur 1 dargestellte Extrusionsanlage umfasst eine Extrudereinheit 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform der Extrudereinheit 1 zugeführt. In der Extrudereinheit 1 wird das Granulat bzw. Pulver erwärmt, geknetet und plastifiziert. Anschließend wird der Kunststoff als formbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird der heiße, noch verformbare Rohr 6 mittels einer am Ende der Extrusionslinie angeordneten Abzugseinheit 7 durch eine Kalibrier- und Kühleinheit 8 gezogen, die einen Vakuumtank 9 mit einer an dessen Eingang angeordneten Kalibrierhülse 10 aufweist. Die Kalibrierhülse 10 ist stufenlos im Durchmesser einstellbar, so dass das extrudierte, noch formbare Rohr 6 auf den gewünschten Wert fixiert werden kann. Nach dem Verlassen der Kalibrier- und Kühleinheit 8 tritt das Rohr 6 in eine Kühlstrecke 11 ein, in der es auf Raumtemperatur abgekühlt wird.

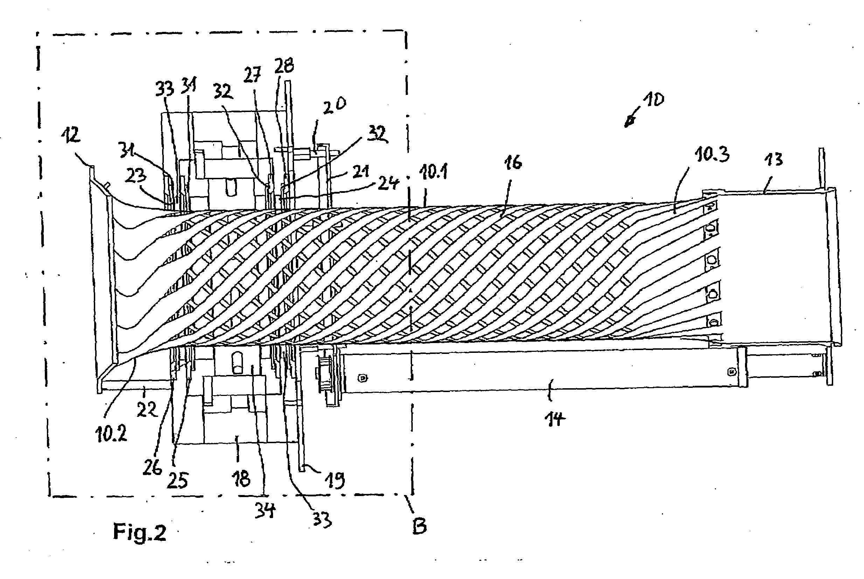

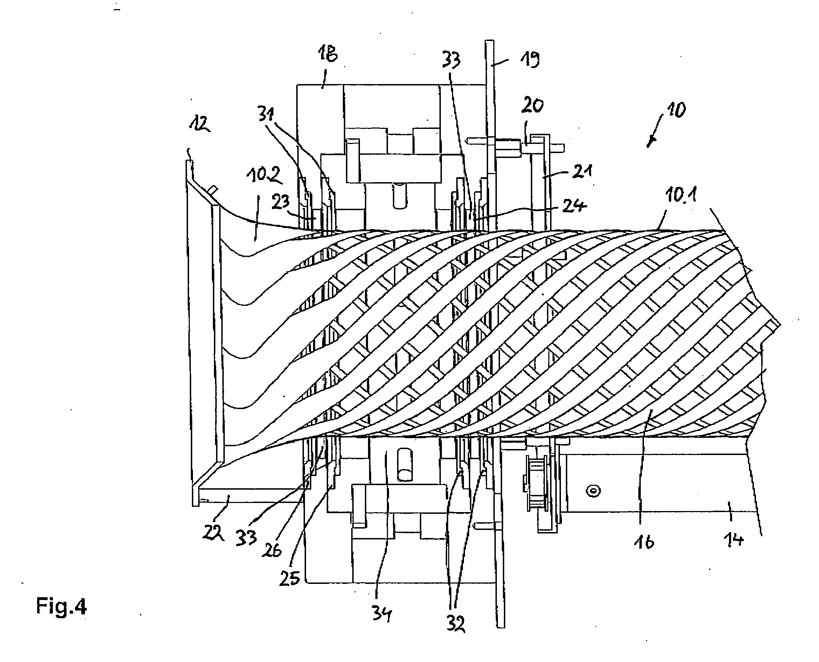

Der Aufbau der Kalibrierhülse 10 wird nachstehend anhand der Figuren 2 bis 7 näher erläutert.

Die Kalibrierhülse 10 besitzt einen ringförmigen Einlaufkopf 12 und einen ringförmigen Auslaufkopf 13. Während der Einlaufkopf 12 außerhalb des Vakuumtanks 9 angeordnet ist, befindet sich der Auslaufkopf 13 im Vakuumtank 9. Der Einlaufkopf 12 und der Auslaufkopf 13 haben einen fixen Innendurchmesser, der größer ist als der größte in der Extrusionsanlage zu fahrende Rohrdurchmesser. Der Auslaufkopf 13 ist gegenüber dem ortsfesten Einlaufkopf 12 in Axialrichtung der Kalibrierhülse 10 verlagerbar. Dazu sind mindestens zwei Spindeleinheiten 14 vorgesehen, von denen in der Zeichnung nur eine sichtbar bzw. dargestellt ist. Zur näheren Erläuterung dieser Spindeleinheiten 14 wird auf die DE 10 2004 029 498 B3 verwiesen, in der der Aufbau der Spindeleinheiten 14 beschrieben ist.

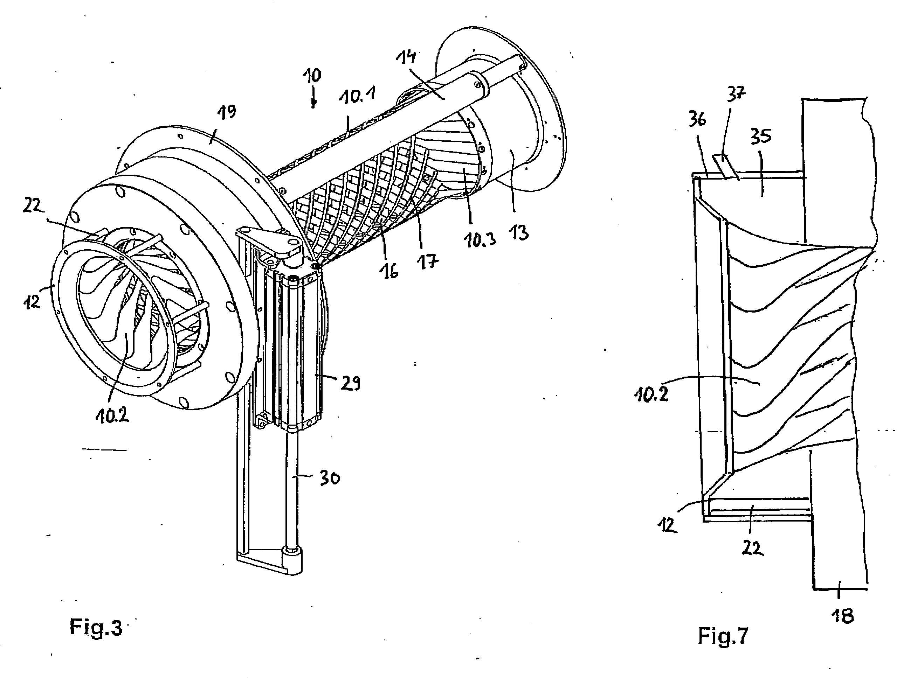

Zwischen dem Einlaufkopf 12 und dem Auslaufkopf 13 sind Innenbänder 16 und Außenbänder 17 angeordnet, die sich in einem hohlzylindrischen Mittelstück 10.1 nach Art einen Scherengitters kreuzen und an Kreuzungspunkten gelenkig miteinander verbunden sind. Die Innenbänder 16 sind über das Mittelstück 10.1 hinaus verlängert und mit ihren Enden gelenkig an den Einlaufkopf 12 bzw. Auslaufkopf 13 angeschlagen. Die Außenbänder 17 sind nur in Figur 3 dargestellt und wurden aus Gründen der Übersichtlichkeit in den anderen Figuren weggelassen.

Der Durchmesser des durch die Innenbänder 16 und der Außenbänder 17 gebildeten hohlzylindrischen Mittelstücks 10.1 ist veränderbar, in dem der Auslaufkopf 13 über die Spindeleinheiten 14 axial verstellt wird. Durch Verstellung des Auslaufkopfes 13 zum Einlaufkopf 12 hin wird der Durchmesser des Mittelstücks 10.1 vergrößert, während durch Verlagerung des Auslaufkopfes 13 vom Einlaufkopf 12 weg sich der Durchmesser des Mittelstücks 10.1 verringert. Je nach dem Auszugsgrad des Mittelstücks 10.1 bilden die Innenbänder 16 in dem über das Mittelstück 10.1 hinaus gehenden Bereich einen Einkaufkonus 10.2 bzw. einen Auslaufkonus 10.3, deren Steigung vom Auszugsgrad abhängig ist. Bei dem kleinsten eingestellten Durchmesser des Mittelstücks 10.1 ist die Steigung von Einlaufkonus 10.2 und Auslaufkonus 10.3 am größten und bei dem größten eingestellten Durchmesser des Mittelstücks 10.1 am kleinsten. In der Zeichnung ist die Kalibrierhülse 10 mit dem größtmöglichen Durchmesser des Mittelstücks 10.1 dargestellt.

Die Innenbänder 16 verbreitern sich im Einlaufkonus 10.2 zum Einlauf hin und überlappen sich in diesem Bereich ausgehend von dem Übergang zum Mittelstück 10.1 zunehmend, so dass sie zumindest direkt am Einlaufkopf 12 eine gewissermaßen geschlossene Konusfläche bilden, was den Einlauf des extrudierten Rohres 6 in die Kalibrierhülse 10 erleichtert.

An die einlaufseitige Stirnwand des Vakuumtanks 9 ist von außen ein Dichtungsgehäuse 18 befestigt. Dieses besitzt dazu einen Flansch 19, über den es an die Stirnwand des Vakuumstanks 9 angeschraubt werden kann. Dem Dichtungsgehäuse 18 gegenüberliegend ist am Flansch 19 über axiale Stützen 20, von denen in der Zeichnung nur eine sichtbar ist, ein Tragring 21 befestigt, an der die Spindeleinheiten 14 gelagert sind. Auf der anderen Seite ist der Einlaufkopf 12 ist über axiale Stützen 22 ortsfest mit dem Dichtungsgehäuse 18 verbunden.

Das Dichtungsgehäuse 18 weist zwei mit fixem Abstand zueinander angeordnete Dichtungen 23 und 24 auf, die nach Art einer Irisblende ausgeführt sind. Jede der Dichtungen 23, 24 besitzt zwei in einem geringen axialen Abstand voneinander angeordnete Ringscheiben 25, 26 bzw. 27, 28 auf. Die äußeren Ringscheiben 26 und 28 sind jeweils drehfest angeordnet, während die beiden inneren Ringscheiben 25 und 27 gegenüber den äußeren Ringscheiben 26, 28 verdrehbar sind. Der Antrieb der beiden inneren Ringscheiben 25 und 27 erfolgt über einen Druckluftzylinder 29, dessen Kolben 30 mit zwei aus der Zeichnung nicht ersichtliche Zahnstangen zusammen wirkt, die jeweils in einen auf dem Aussendurchmesser der Ringscheiben 25 und 27 angeordneten verzahnten Abschnitt eingreifen. In die Ringscheiben 25, 26 bzw. 27, 28 jeder der Dichtungen 23 bzw. 24 sind die Enden 31 bzw. 32 eines in Falten gelegten hohlzylindrischen, wasser- und luftdichten flexiblen Flächengebildes 33 aus einem geeignetem Kunststoffmaterial eingebunden.

Im Betrieb liegt das flexible Flächengebilde 33 der Dichtungen 23 und 24 mit einem entsprechenden Anpressdruck, der durch den die Ringscheiben 25 bzw. 27 beaufschlagenden Druckluftzylinder 29 aufrecht erhalten wird, auf dem Aussendruchmesser des Mittelstücks 10.1 an. Wenn die Kalibrierhülse 10 auf einen anderen Durchmesser eingestellt wird, werden die Dichtungen 23, 24 synchron radial verstellt, so dass sie immer dichtend von außen an dem Mittelstück 10.1 anliegen. Die radiale Verstellung der Dichtungen 23, 24 erfolgt durch Drehbeaufschlagung ihrer Ringscheiben 25 bzw. 27 durch die über den Druckluftzylinder 29 angetriebenen Zahnstangen.

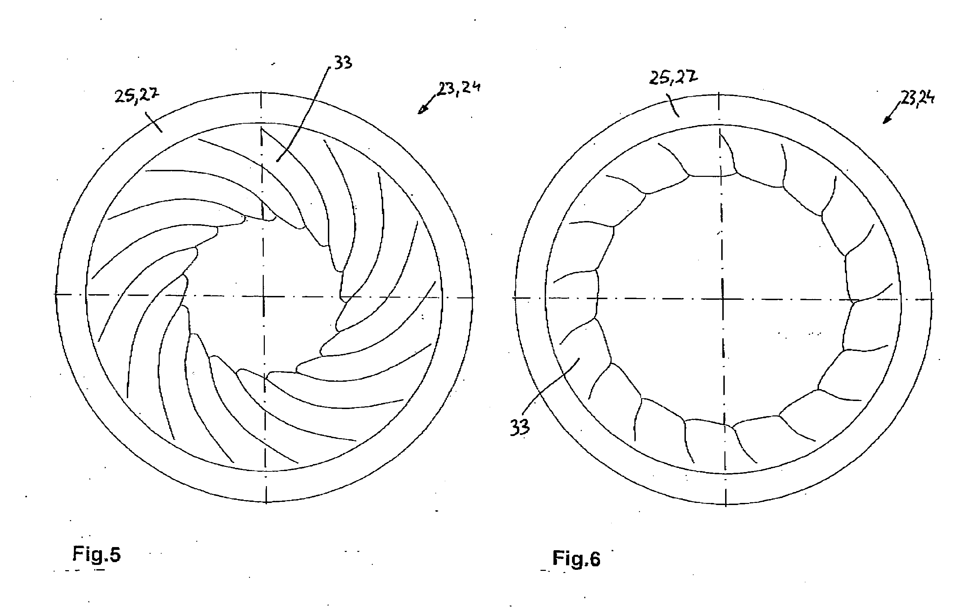

Fig. 6 zeigt schematisch die Dichtungen 23, 24 mit einer Einstellung die dem größtmöglichen Durchmesser des Mittelstücks 10.1 entspricht. Wenn die Kalibrierhülse 10 auf einen kleineren Durchmesser eingestellt wird, werden die Dichtungen 23, 24 entsprechend zugefahren. Das geschieht durch Verdrehen ihrer Ringscheiben 25, 26 bzw. 27, 28 relativ zueinander. Dadurch werden die Falten des Flächengebildes 33 auseinander gezogen, wobei sie sich gleichzeitig radial nach innen verwinden. Das geht aus der Darstellung gemäß Fig. 5 hervor, die die Dichtungen 23, 24 auf den kleinsten Außendurchmesser des Mittelstücks 10.1 eingestellt zeigt. Da das Flächengebilde 33 in Falten gelegt ist, ist genügend "Material" vorhanden, um die bei der Verstellung der Dichtung 23 erforderliche radiale Ausdehnung des Flächengebildes 33 zu ermöglichen.

Die Dichtungen 23, 24 schließen zwischen sich eine Wasserkammer 34 ein, die zur Kalibrierhülse 10 hin offen ist. In diese Wasserkammer 34 münden nicht dargestellte Sprühdüsen, über die eine dosierte Wasserzuführung in die Wasserkammer 34 erfolgt. Das in der Wasserkammer 34 befindliche Wasser gelangt über die zwischen den Innenbändem 16 und Außenbändern 17 vorhandenen Lücken auf das extrudierte Rohr 6 und sorgt neben einer Abdichtung gleichzeitig für eine Kühlung und Gleitschmierung des extrudierten Rohres 6. Um die Benetzung des Rohres 6 mit Wasser zu verbessern, können die Innenbänder 16 und Außenbänder 17 im Bereich der Wasserkammer 34 perforiert sein.

Die äußere Dichtung 23 sorgt für eine Abdichtung gegenüber der Umgebung, während die innere Dichtung 24 gegen den Unterdruck im Vakuumtank abdichtet.

In dem gezeigten Ausführungsbeispiel ist die äußere Dichtung 23 am Übergang vom Mittelstück 10.1 zum Einkaufkonus 10.2 angeordnet. Diese Anordnung trifft natürlich nur exakt auf eine bestimmte Durchmessereinstellung der Kalibrierhülse 10 zu, da die Dichtung in diesem Ausführungsbeispiel ortsfest angeordnet ist. Beim Verstellen der Kalibrierhülse 10 wandert der Übergang vom Mittelstück 10.1 auf den Einlaufkonus 10.2, und zwar so, dass er beim kleiner Stellen vom Extrusionswerkzeug 4 weg wandert und beim größer Stellen zu dem Extrusionswerkzeug 4 hin wandert. Dieser "Wanderbewegung" wird über ein Teil des Weges durch das flexible Flächengebilde. 33 der äußeren Dichtung 23 kompensiert, in dem dieses axial mitwandert.

Damit die äußere Dichtung 23 bei allen möglichen Durchmessern der Kalibrierhülse 10 am Übergang zwischen dem Mittelstück 10.1 und dem Einlaufkonus 10.2 angeordnet ist, ist in einer weiteren Ausführungsform der Erfindung vorgesehen, dass die äußere Dichtung 23 mit dem Übergang mitwandert. Dazu ist ein axialer Antrieb der äußeren Dichtung 23 vorgesehen, der synchron mit der Durchmesserverstellung der Kalibrierhülse 10 verstellt wird. Da sich bei dieser Verstellung der Abstand zwischen der äußeren Dichtung 23 und der innern Dichtung 24 ändert, muss das Dichtungsgehäuse 18 teleskopisch ausgeführt sein.

In einer weiteren in Figur 7 dargestellten Ausführungsform der Erfindung ist der Raum 35 zwischen dem Einlaufkopf 12 und dem Dichtungsgehäuse 18 durch einen umlaufenden Mantel 36 geschlossen. In den Raum 35 wird über eine Luftleitung 37 Luft eingeblasen, die der Kühlung des Einlaufs der Kalibrierhülse 10 und des extrudierten Rohres 6 dient.

In den gezeigten Ausführungsbeispielen ist die äußere Dichtung 23 am Übergang vom Mittelstück 10.1 zum Einlaufkonus 10.2 angeordnet. Sie kann anstelle dessen auch im Bereich des Einlaufkonus 10.2 angeordnet sein. In diesm Falle muß dann ein getrennter Antrieb der beiden Dichtungen 23, 24 vorgesehen sein.

## Patentansprüche

1. Stufenlos einstellbare Kalibrierhülse für extrudierte Kunststoffrohre mit einem Einlaufkopf (12) und einem Auslaufkopf (13), deren axialer Abstand zueinander verstellbar ist, sowie mit Innenbändern (16) und Außenbändern (17), die sich in einem zylindrischen Mittelstück (10.1) der Kalibrierhülse (10) nach Art eines Scherengitters kreuzen und an Kreuzungspunkten gelenkig miteinander verbunden sind, wobei die Innenbänder (16), einen Einlaufkonus (10.2) bzw. Auslaufkonus (19.3) bildend, über das Mittelstück (10.1) hinaus verlängert und mit ihren Enden gelenkig an den Einlaufkopf (12) bzw. Auslaufkopf (13) angeschlagen sind, **dadurch gekennzeichnet, dass** im Bereich des Einlaufkonus (10.2) oder am Übergang vom Einlaufkonus (10.2) zum Mittelstück (10.1) eine erste Dichtung (23) und von dieser in Richtung des Auslaufkonus (10.3) beabstandet eine zweite Dichtung (24) angeordnet ist, die radial derart verstellbar sind, dass ihre Öffnungsweite dem jeweilig eingestellten Außendurchmesser des Mittelstücks (10.1) bzw. des Einlaufkonus (10.2) entspricht, und die zwischen sich eine zum extrudierten Rohr (6) hin offene Wasserkammer (31) definieren.

2. Stufenlos einstellbare Kalibrierhülse nach Anspruch1, **dadurch gekennzeichnet, dass** die erste Dichtung (23) axial verfahrbar ist.

3. Stufenlos einstellbare Kalibrierhülse nach Anspruch1 oder 2, **dadurch gekennzeichnet, dass** mindestens eine der Dichtungen (23, 24) nach Art einer Irisblende aufgebaut ist.

4. Stufenlos einstellbare Kalibrierhülse nach Anspruch 3, **dadurch gekennzeichnet, dass** die Dichtungen )23, 24) zwei gegeneinander verdrehbare Ringscheiben (25, 26; 27, 28) aufweisen, an denen jeweils ein Ende eines in Falten gelegten, hohlzylindrischen, wasser-und luftdichten Flächengebildes (33) festgelegt ist.

5. Stufenlos einstellbare Kalbrierhülse nach Anspruch 4, **dadurch gekennzeichnet, dass** eine der Ringscheiben (25, 27) über einen Druckluftzylinder (29) in Drehrichtung beaufschlagbar ist, um einen Anpreßdruck des Flächengebildes (33) auf den Außendurchmesser des Mittelstücks(10.1) bzw. des Einlaufkonus (10.2) zu erzeugen.

6. Stufenlos einstellbare Kalibrierhülse nach Anspruch 5, **dadurch gekennzeichnet, dass** die eine Ringscheibe (25, 27) auf ihrem Außendurchmesser einen verzahnten Abschnitt aufweist, in den eine von dem Druckluftzylinder (29) beaufschlagbare Zahnstange eingreift.

7. Stufenlos einstellbare Kalibrierhülse nach Anspruch 5, **dadurch gekennzeichnet, dass** sich die Innenbänder (16) im Einlaufkonus (10.2) zum Einlauf hin verbreitern und sich im Einlaufkonus (10.2) überlappen.

8. Stufenlos einstellbare Kalibrierhülse nach einem der vorstehenden Ansprüche, **dadurch gekennzeichnet, dass** die Innenbänder (16) und Außenbänder (17) im Bereich der Wasserkammer (34) perforiert sind.

9. Stufenlos einstellbare Kalibrierhülse nach einem der vorstehenden Ansprüche, **dadurch gekennzeichnet, dass** in die Wasserkammer (34) Sprühdüsen münden, über die eine dosierte Wasserzufuhr erfolgt.
